(19) Europäisches Patentamt
European Patent Office
Office européen des brevets

(11) EP 3 135 722 A1

(12) **EUROPEAN PATENT APPLICATION**

(43) Date of publication:
**01.03.2017 Bulletin 2017/09**

(21) Application number: **16185322.1**

(22) Date of filing: **23.08.2016**

(51) Int Cl.:
***C08K 5/3415*** *(2006.01)* ***C08G 73/12*** *(2006.01)*
***C08L 79/08*** *(2006.01)* ***C08L 79/04*** *(2006.01)*
***C08L 63/00*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **24.08.2015 JP 2015164546**

(71) Applicant: **Shin-Etsu Chemical Co., Ltd.**
**Chiyoda-ku,**
**Tokyo 100-0004 (JP)**

(72) Inventors:
- **KUSHIHARA, Naoyuki**
  **Annaka-shi, Gunma 379-0224 (JP)**
- **SUMITA, Kazuaki**
  **Annaka-shi,, Gunma 379-0224 (JP)**

(74) Representative: **Zacco GmbH**
**Bayerstrasse 83**
**80335 München (DE)**

(54) **HEAT-CURABLE RESIN COMPOSITION**

(57) Provided is a heat-curable resin composition for use in electric and electronics industry which is suitable as an underfill and for performing potting, and is superior in fluidity, moisture resistance reliability and adhesiveness at a high temperature. The heat-curable resin composition of the invention contains

(A) a heat-curable resin; and
(B) a bismaleimide compound in liquid form at 25°C, and exhibits a viscosity of 1 mPa·s to 850 Pa·s when measured at 25°C in accordance with a method described in JIS Z8803:2011.

EP 3 135 722 A1

## Description

[Technical field]

The present invention relates to a heat-curable resin composition containing a heat-curable resin and a liquid bismaleimide compound.

[Background art]

In recent years, electronic devices such as mobile phones, smartphones, ultrathin liquid crystal or plasma TVs and light laptop computers have been downsized in a growing manner. Electronic parts used in these electronic devices have, for example, been highly densely integrated or even packaged in a growing manner as well. Further, it is required that a resin material used in these electronic parts be low-expansion one for the sake of a thermal stress that occurs at the time of manufacture and use. Furthermore, since these electronic parts will generate larger amounts of heat as they become highly integrated, it is required that the resin material also have a heat resistance.

Conventionally, cyanic ester resins are superior in heat resistance and are known as heat-curable resins with low electric permittivities and low dielectric losses. However, while a cured product employing a novolac-type cyanic ester resin described in Patent document 1 is superior in terms of thermal expansion, the cured product has a high water absorption rate and may exhibit a reduced heat resistance after moisture absorption.

As a resin composition capable of forming a cured product superior in mechanical strength, adhesion strength to an adherend, film-forming property, heat resistance and pressure resistance, Patent document 2 discloses a resin composition containing a polyamideimide resin (VYLOMAX HR16NN by Toyobo Co., Ltd.), diphenylethane bismaleimide (BMI-70 by K-I Chemical Industry Co., LTD.) and an allylphenol resin (MEH-8000H by Showa Kasei Kogyo Co., Ltd.). Since this resin composition employs a thermoplastic high-molecular-weight polyamideimide resin, the resin composition has a poor low-temperature meltability, and has a poor compatibility with a maleimide compound. Therefore, phase separation may occur at the time of curing a contacting film of such resin composition, which makes it difficult to obtain an uniform coating film. Further, since there is used a high-boiling solvent such as NMP or the like, there exists a problem that the solvent will remain at B-stage.

In addition, as a resin composition exhibiting a favorable adhesion and capable of forming a cured product superior in moisture resistance, Patent document 3 discloses an epoxy resin composition for semiconductor encapsulation which contains an epoxy resin, an imidazole compound and a maleimide compound. However, since this resin composition has a high elasticity, cracks may occur in the cured product thereof when subjected to a stress such as a large temperature change in, for example, a temperature cycling test.

[Prior art documents]

[Patent documents]

[Patent document 1] JP-A-H11-124433
[Patent document 2] JP-A-2004-168894
[Patent document 3] Japanese Unexamined Patent Application Publication (Translation of PCT Application) No. 2014-521754

[Summary of the invention]

[Problem to be solved by the invention]

Therefore, it is an object of the present invention to provide a heat-curable resin composition for use in electric and electronics industry which has a superior fluidity, a low viscosity, a superior moisture resistance reliability due to its low water absorption rate, a low elasticity; and is thus suitable as an underfill and for performing potting.

[Means to solve the problem]

The inventors of the present invention diligently conducted a series of studies to solve the abovementioned problems, and completed the invention as follows. That is, the inventors found that the above objectives could be achieved by a heat-curable resin composition containing the following heat-curable resin and liquid bismaleimide compound.

Specifically, the present invention is to provide the following heat-curable resin composition.

[1] A heat-curable resin composition containing:

(A) a heat-curable resin; and
(B) a bismaleimide compound in liquid form at 25°C, wherein

the heat-curable resin composition exhibits a viscosity of 1 mPa·s to 850 Pa·s when measured at 25°C in accordance with a method described in JIS Z8803:2011.
[2] The heat-curable resin composition according to [1], wherein the heat-curable resin (A) includes a heat-curable resin component (A1) and a curing agent (A2).
[3] The heat-curable resin composition according to [2], wherein the heat-curable resin component (A1) is at least one selected from an epoxy resin, a phenolic resin, an unsaturated imide resin, a cyanate resin, an isocyanate resin, a benzoxazine resin, an oxetane resin, an amino resin, an unsaturated polyester resin, an allyl resin, a dicyclopentadiene resin, a silicone resin, a triazine resin and a melamine resin.
[4] The heat-curable resin composition according to [3], wherein the heat-curable resin component (A1) is an epoxy resin or a cyanate resin, and the curing agent (A2) is a curing agent for either an epoxy resin or a cyanate resin.
[5] The heat-curable resin composition according to any one of [1] to [4], wherein the bismaleimide compound (B) in liquid form at 25°C is a compound represented by the following formula (1):

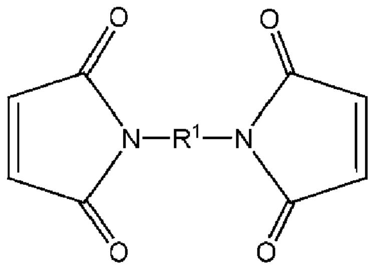

(1)

wherein $R^1$ represents at least one kind of divalent organic group selected from the group consisting of a linear or branched alkylene group having 1 to 40 carbon atoms; a divalent cyclic hydrocarbon group that has 3 to 20 carbon atoms and may also have a hetero atom(s); -O-; -NH-; -S- ; and $-SO_2-$.
[6] The heat-curable resin composition according to [5], wherein the bismaleimide compound represented by the formula (1) is at least one kind of bismaleimide compound selected from the group consisting of bismaleimide compounds represented by the following formulae (1-1), (1-2) and (1-3):

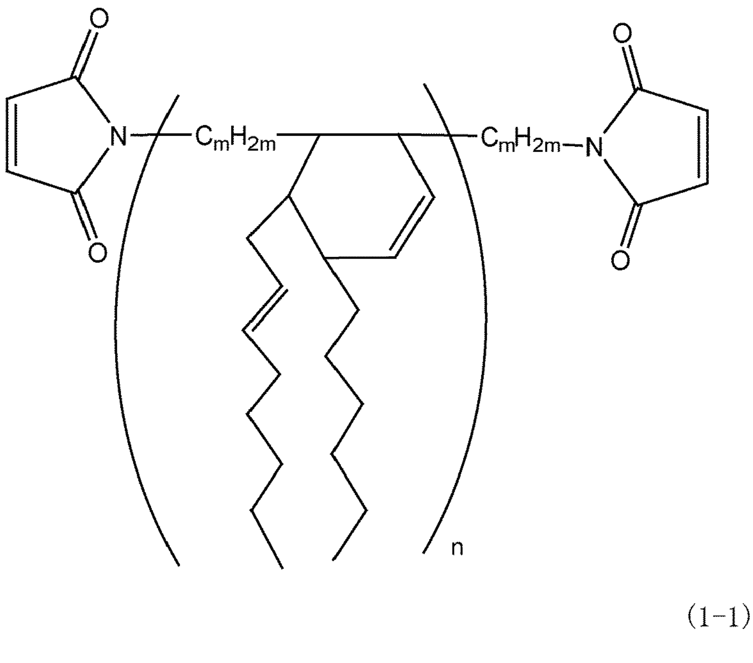

(1-1)

wherein n represents 1 to 10, and m represents 8 to 40

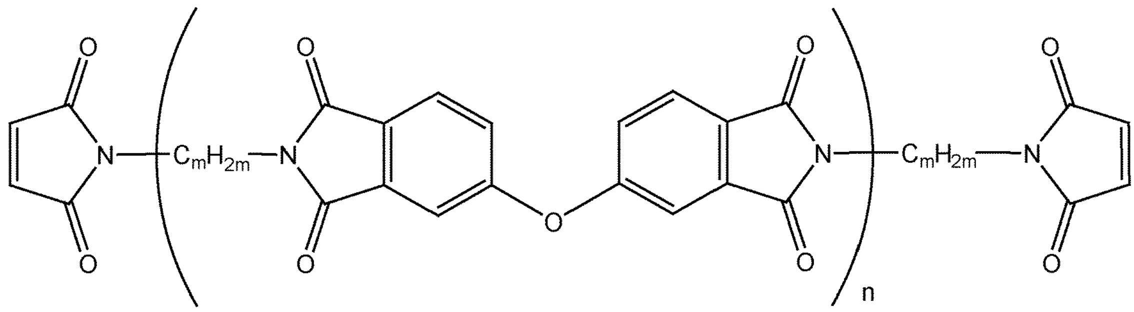

(1-2)

wherein n represents 1 to 10, and m represents 8 to 40

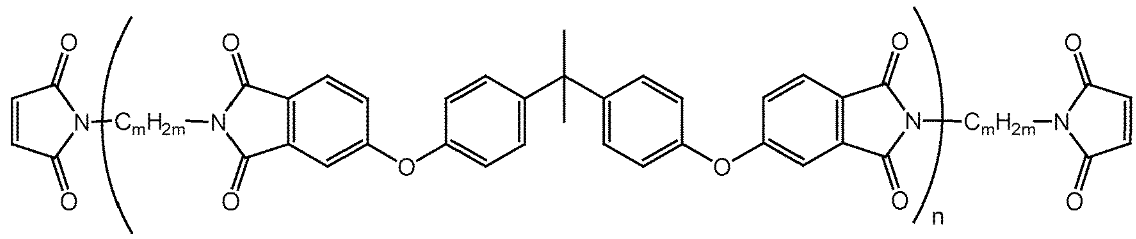

(1-3)

wherein n represents 1 to 10, and m represents 8 to 40

[Effects of the invention]

The heat-curable resin composition of the present invention does not employ a solvent, but has a superior workability and exhibits an unimpaired resin reliability even under a high-humidity/temperature condition and a high-temperature condition.

[Mode for carrying out the invention]

The present invention is described in detail hereunder.

(A) Heat-curable resin

A heat-curable resin (A) of the present invention includes a heat-curable resin component (A1) and a curing agent (A2).

(A1) Heat-curable resin component

Examples of such heat-curable resin component (A1) include an epoxy resin, a phenolic resin, an unsaturated imide resin, a cyanate resin, an isocyanate resin, a benzoxazine resin, an oxetane resin, an amino resin, an unsaturated polyester resin, an allyl resin, a dicyclopentadiene resin, a silicone resin, a triazine resin and a melamine resin. Each of these resins may be used singularly, or two or more of them may be used in combination. Among the above resins, preferred are an epoxy resin and a cyanate resin in terms of moldability of the composition and electrical insulation property of the cured product thereof.

Examples of the above epoxy resin include a bisphenol A-type epoxy resin; a bisphenol F-type epoxy resin; a bisphenol S-type epoxy resin; a phenol novolac type epoxy resin; a cresol novolac type epoxy resin; a bisphenol A novolac-type epoxy resin; a bisphenol F novolac-type epoxy resin; a stilbene type epoxy resin; a triazine skeleton-containing epoxy resin; an fluorene skeleton-containing epoxy resin; a triphenol alkane type epoxy resin; a biphenyl type epoxy resin; a xylylene type epoxy resin; a biphenyl aralkyl type epoxy resin; a naphthalene type epoxy resin; a dicyclopentadiene type epoxy resin; an alicyclic epoxy resin; an aminophenol type epoxy resin; a hydrogenated bisphenol type epoxy resin; an alcohol ether type epoxy resin; multifunctional phenols; diglycidyl ether compounds of polycyclic aromatics such as anthracene; and a phosphorus-containing epoxy resin obtained by introducing an phosphorus compound into any of these epoxy materials. Among these examples and in terms of workability, preferred are a liquid bisphenol A-type epoxy resin, a liquid bisphenol F-type epoxy resin, a liquid naphthalene type epoxy resin, a liquid aminophenol type epoxy resin, a liquid hydrogenated bisphenol type epoxy resin, a liquid alcohol ether type epoxy resin, a liquid cyclic aliphatic type epoxy resin and a liquid fluorene type epoxy resin which are in liquid form under room temperature. Each of the above examples may be used singularly, or two or more of them may be used in combination.

Examples of the above cyanate resin include a bisphenol-type cyanate resin such as a novolac type cyanate resin, a bisphenol A-type cyanate resin, a bisphenol E-type cyanate resin and a tetramethyl bisphenol F-type cyanate resin; and a prepolymer of any of these bisphenol-type cyanate resins that partially has a triazine. Among these examples, a bisphenol E-type cyanate resin and a novolac type cyanate resin are preferred in terms of heat resistance and workability. Each of the above examples may be used singularly, or two or more of them may be used in combination.

(A2) Curing agent

As a curing agent (A2) for such heat-curable resin component (A1), a known curing agent may be selected in accordance with the kind of the heat-curable resin component (A1). There are no particular restrictions on such curing agent as long as it is a compound having functional groups reactive with epoxy groups (referred to as "epoxy reactive groups" hereunder). Examples of such curing agent for the epoxy resin include a phenolic resin, an acid anhydride and amines. Among these examples, a phenolic resin is preferred in view of a balance between a curability and a stability at stage B.

Examples of such phenolic resin include those of a novolac type, a bisphenol type, a tris (hydroxyphenyl) methane type, a naphthalene type, a cyclopentadiene type and a phenol aralkyl type. Examples of such acid anhydride include a phthalic anhydride, a pyromellitic anhydride, a maleic anhydride and a maleic anhydride copolymer. Examples of such amines include dicyandiamide, diaminodiphenylmethane and diaminodiphenyl sulfone. Each of these phenolic resins and acid anhydrides may be used singularly, or two or more of them may be mixed together. In the present invention, it is preferred that the curing agent be in liquid form. Particularly, preferred are curing agents that are in liquid form at 25 to 200°C. More particularly, a bisphenol-type phenolic resin in liquid form at 25°C or a novolac-type phenolic resin in liquid form at 25°C is preferred.

It is preferred that the curing agent for the epoxy resin be added in an amount at which an equivalent ratio of the epoxy reactive group in such curing agent to 1 equivalent of the epoxy group in the epoxy resin becomes 0.8 to 1.25, more preferably 0.9 to 1.1. When such equivalent ratio (molar ratio) is lower than 0.8, unreacted epoxy groups will remain in a cured product obtained such that a glass-transition temperature may decrease, and that an adhesion to a base material may be impaired. When the equivalent ratio (molar ratio) is greater than 1.25, the cured product will become hard and brittle in a way such that cracks may occur at the time of performing reflow or being subjected to a temperature cycle.

Further, there are no particular restrictions on a curing agent for curing such cyanate resin, as long as it is a compound having functional groups reactive with cyanate groups (referred to as "cyanate reactive groups" hereunder). There may be used a known curing agent meeting the aforesaid requirement. Examples of the curing agent for such cyanate resin include phenolic resins, acid anhydrides and amines. Specific examples thereof include a multifunctional phenolic compound such as a phenol novolac resin, a cresol novolac resin and an amino triazine novolac resin; an amine compound such as dicyandiamide, diaminodiphenyl methane and diaminodiphenyl sulfone; and an acid anhydride such as phthalic anhydride, pyromellitic anhydride, maleic anhydride and a maleic anhydride copolymer. Each of these examples may be used singularly, or two or more of them may be mixed together. It is preferred that such curing agent be added in an amount at which a equivalent ratio of the cyanate reactive group in such curing agent to 1 equivalent of the cyanate group in the component (A) becomes 0.8 to 40, more preferably 0.9 to 30. When such equivalent ratio (molar ratio) is lower than 0.8, unreacted cyanate groups will remain in the cured product obtained such that the glass-transition temperature may decrease, and that the adhesion to a base material may be impaired. When the equivalent ratio (molar ratio) is greater than 40, the cured product will become hard and brittle in a way such that cracks may occur at the time of performing reflow or being subjected to a temperature cycle.

It is preferred that the heat-curable resin (A) be contained in the composition of the present invention by an amount of 10 to 90% by mass, more preferably 20 to 80% by mass, or even more preferably 20 to 70% by mass.

(B) Bismaleimide compound in liquid form at room temperature

One example of a bismaleimide compound (B) in liquid form at room temperature (25°C) is a compound represented by the following formula (1).

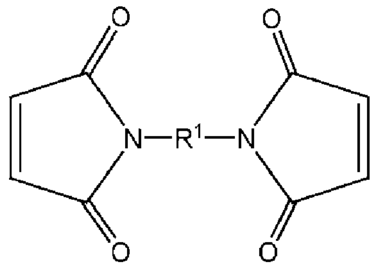

(1)

In the above formula (1), $R^1$ represents at least one kind of divalent organic group selected from the group consisting of a linear or branched alkylene group having 1 to 40 carbon atoms; a divalent cyclic hydrocarbon group that has 3 to 20 carbon atoms and may also have a hetero atom(s); -O-; -NH-; -S- ; and $-SO_2-$.

The number of the carbon atoms of the linear or branched alkylene group is appropriately selected in view of heat resistance and compatibility with other components such as (A) and (C). Specific examples of such alkylene group include a methylene group, an ethylene group, a propylene group, a butylene group, a 2,2-dimethylpropylene group, a hexylene group, an octylene group, a decylene group, a dodecylene group, a tetradecylene group, a hexadecylene group and an octadecylene group.

Such cyclic hydrocarbon group may be a homocyclic hydrocarbon group, a heterocyclic hydrocarbon group, an aliphatic hydrocarbon group, or an aromatic hydrocarbon group. Also, such cyclic hydrocarbon group may be a monocyclic hydrocarbon group having one ring, a polycyclic hydrocarbon group having multiple rings, or a polycyclic condensed hydrocarbon group whose multiple rings are condensed. Each monocyclic hydrocarbon group preferably has 3 to 10 atoms, more preferably 4 to 8 atoms, even more preferably 5 to 7 atoms composing its ring. Each polycyclic condensed hydrocarbon group preferably has 8 to 20 atoms, more preferably 10 to 14 atoms, even more preferably 10 to 12 atoms composing its rings.

Each of the above cyclic hydrocarbon groups may be used singularly, bonded to a single bond or even bonded to an other group represented by $R^1$. Further, a ring structure in the cyclic hydrocarbon groups may also have a substituent group such as an alkyl group having 1 to 20 carbon atoms; a monovalent unsaturated hydrocarbon group having 2 to 20 carbon atoms; a hydroxyl group; and a carbonyl group.

Examples of the aromatic hydrocarbon group include groups represented by the following formulae (2) and (3).

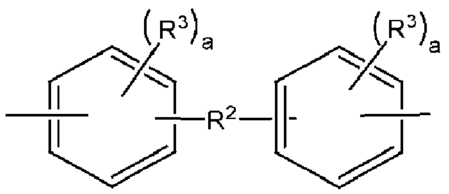

(2)

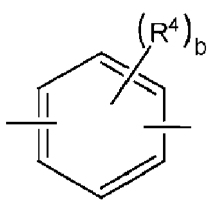

(3)

In the above formula (2), $R^2$ is selected from a single bond, $-CH_2-$, -O-, -S-, $-SO_2-$ and $-C(CH_3)_2-$, among which $-CH_2-$ is preferred.

Each $R^3$ independently represents a group selected from a hydroxyl group; and a linear or branched alkyl group having 1 to 6 carbon atoms, where a methyl group or an ethyl group is preferred. a is preferably 0 to 4, more preferably 0, 1 or 2.

In the above formula (3), each $R^4$ independently represents a group selected from a hydroxyl group; and a linear or branched alkyl group having 1 to 6 carbon atoms, where a methyl group or an ethyl group is preferred. b is preferably 0 to 4, more preferably 0, 1 or 2.

Examples of the heterocyclic hydrocarbon group include groups represented by the following formulae (4) and (5).

- RingA - (4)

$- R^{10}$ - RingA - $R^{11}$ - RingB - $R^{12}$ - (5)

In the above formula (4) or (5), each of $R^{10}$, $R^{11}$ and $R^{12}$ independently represents a single bond or a group selected from an alkylene group having 1 to 40 carbon atoms; -O-; -NH-; -S-; $-SO_2-$ or $-C(CH_3)_2-$.

Each of ring A and ring B independently represents a divalent group having a ring(s), such as furan, pyrrole, imidazole, thiophene, pyrazole, oxazole, isoxazole, thiazole, pyridine, pyrazine, pyrimidine, pyridazine, triazine, benzofuran, isobenzofuran, indole, isoindole, benzothiophene, benzophosphole, benzoimidazole, purine, indazole, benzoxazole, benzisoxazole, benzothiazole, naphthalene, quinoline, isoquinoline, quinoxaline, quinazoline and cinnoline. Here, each of these groups may have a substituent group(s).

In the present invention, the component (B) is said to be in a "liquid form," when it exhibits a fluidity at 25°C under the atmosphere. Particularly, it is sufficient that such fluidity be that where a viscosity of the component (B) is measurable at 25 to 80°C, preferably 25 to 60°C, using a cone plate-type viscometer manufactured in accordance with JIS Z 8803:2011.

As the bismaleimide compound that is represented by formula (1) and is in liquid form at 25°C, preferred are those containing at least two alkylene groups having 8 to 40 carbon atoms, as the organic group represented by $R^1$ in the general formula (1). Especially, preferred are those represented by the following formulae (1-1), (1-2) and (1-3).

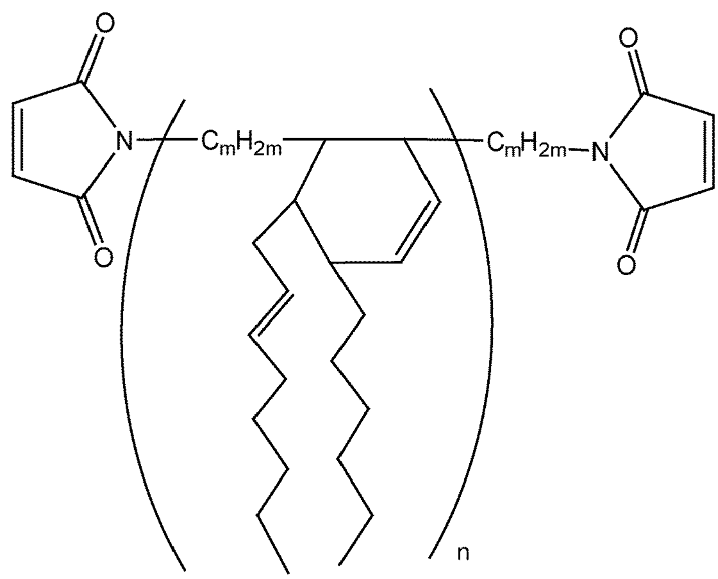

(1-1)

(In formula (1-1), n represents 1 to 10, and m represents 8 to 40)

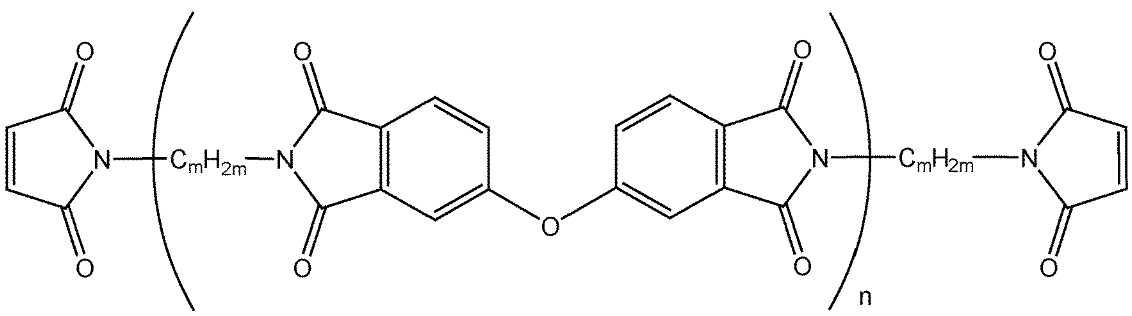

(1-2)

(In formula (1-2), n represents 1 to 10, and m represents 8 to 40)

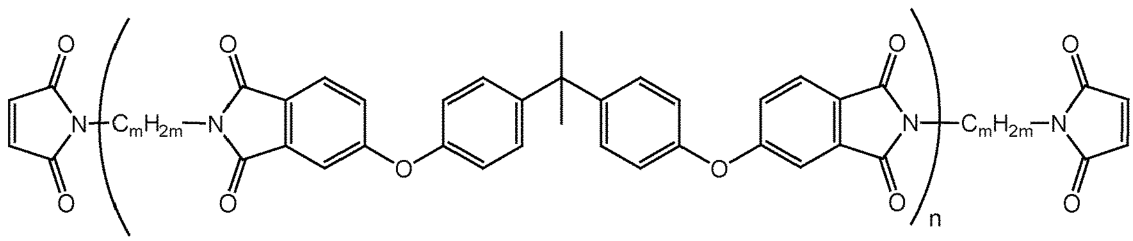

(1-3)

(In formula (1-3), n represents 1 to 10, and m represents 8 to 40)

It is preferred that the bismaleimide compound as the component (B) be contained in the composition of the present invention, by an amount of 10 to 90% by mass, more preferably 20 to 80% by mass, and even more preferably 20 to 70% by mass. Here, it is preferred that a compounding ratio as a mass ratio between the heat-curable resin as the component (A) and the bismaleimide compound as the component (B) be 90:10 to 10:90, more preferably 80:20 to 30:70, and even more preferably 80:20 to 50:50.

(C) Other additives

The heat-curable resin composition of the present invention can be obtained by combining given amounts of the components (A) and (B). However, an other additive(s) as a component (C) may be added if necessary, without impairing the objectives and effects of the invention. Examples of such additives include a curing accelerator, a polymerization initiator, an inorganic filler, a mold release agent, a flame retardant, an ion trapping agent, an antioxidant, an adhesion imparting agent, a low-stress agent, a coloring agent and a coupling agent.

There are no particular restrictions on a curing accelerator as the component (C) of the present invention, as long as it is capable of accelerating the curing reaction.

Examples of such curing accelerator include a phosphorus compound such as triphenylphosphine, tributylphosphine, tri(p-methylphenyl)phosphine, tri(nonylphenyl)phosphine, triphenylphosphine-triphenylborane and tetraphenylphosphine-tetraphenylborate; a tertiary amine compound such as triethylamine, benzyldimethylamine, α-methylbenzyldimethylamine and 1,8-diazabicyclo [5.4.0] undecene-7; and an imidazole compound such as 2-methylimidazole, 2-phenylimidazole, 2-ethyl-4-methylimidazole and 2-phenyl-4-methylimidazole. Here, preferred are triphenylphosphine and triphenylphosphine-triphenylborane. It is preferred that such curing accelerator be added in an amount of 0.5 to 10 parts by mass, more preferably 0.5 to 5 parts by mass, with respect to a total of 100 parts by mass of the components (A) and (B).

Further, a thermal radical polymerization initiator is preferred as the polymerization initiator. There are no particular restrictions on such polymerization initiator, as long as it is normally used as a polymerization initiator. It is preferred that a thermal radical polymerization initiator be that bringing about a decomposition starting temperature (i.e. temperature at which a specimen starts to decompose, as temperature rises at a rate of 4°C / min, with 1 g of such specimen being placed on a hot plate) of 40 to 140°C in a rapid heating test. It is not preferable when the decomposition starting temperature is lower than 40°C, because the heat-curable resin composition will exhibit an impaired storability at normal temperature in such case. Also, it is not preferable when the decomposition starting temperature is greater than 140°C, because a curing time will become extremely long in such case. Specific examples of a thermal radical polymerization initiator meeting these requirements include methylethylketone peroxide; methylcyclohexanone peroxide; methyl acetoacetate peroxide; acetylacetone peroxide; 1,1-bis (t-butylperoxy) 3,3,5-trimethyl cyclohexane; 1,1-bis (t-hexylperoxy) cyclohexane; 1,1-bis (t-hexylperoxy) 3,3,5-trimethyl cyclohexane; 1,1-bis (t-butylperoxy) cyclohexane; 2,2-bis (4,4-di-t-butylperoxycyclohexyl) propane; 1,1-bis (t-butylperoxy) cyclododecane; n-butyl 4,4-bis (t-butylperoxy) valerate; 2,2-bis (t-butylperoxy) butane; 1,1-bis (t-butylperoxy)-2-methylcyclohexane; t-butyl hydroperoxide; p-menthane hydroperoxide; 1,1,3,3-tetramethylbutyl hydroperoxide; t-hexyl hydroperoxide; dicumyl peroxide; 2,5-dimethyl-2,5-bis (t-butylperoxy) hexane; α, α'-bis (t-butylperoxy) diisopropyl benzene; t-butylcumyl peroxide; di-t-butyl peroxide; 2,5-dimethyl-2,5-bis (t-butylperoxy) hexyne-3; isobutyryl peroxide; 3,5,5-trimethylhexanoyl peroxide; octanoyl peroxide; lauroyl peroxide; cinnamic acid peroxide; m-toluoyl peroxide; benzoyl peroxide; diisopropyl peroxydicarbonate; bis (4-t-butylcyclohexyl) peroxydicarbonate; di-3-methoxybutyl peroxydicarbonate; di-2-ethylhexyl peroxydicarbonate; di-sec-butyl peroxydicarbonate; di (3-methyl-3-methoxybutyl) peroxydicarbonate; di (4-t-butylcyclohexyl) peroxydicarbonate; α, α'-bis (neodecanoylperoxy) diisopropylbenzene; cumylperoxy neodecanoate; 1,1,3,3-tetramethylbutyl peroxyneodecanoate; 1-cyclohexyl-1-methylethyl peroxyneodecanoate; t-hexyl peroxyneodecanoate; t-butyl peroxyneodecanoate; t-hexyl peroxypivalate; t-butyl peroxypivalate; 2,5-dimethyl-2,5-bis (2-ethylhexanoylperoxy) hexane; 1,1,3,3-tetramethylbutylperoxy-2-ethylhexanoate; 1-cyclohexyl-1-methylethylperoxy-2-ethylhexanoate; t-hexylperoxy-2-ethylhexanoate; t-butylperoxy-2-ethylhexanoate; t-butylperoxy isobutyrate; t-butylperoxy maleic acid; t-butylperoxy laurate; t-butylperoxy-3,5,5-trimethyl hexanoate; t-butylperoxyisopropyl monocarbonate; t-butylperoxy-2-ethylhexyl monocarbonate; 2,5-dimethyl-2,5-bis (benzoylperoxy) hexane; t-butylperoxy acetate; t-hexylperoxy benzoate; t-butylperoxy-m-toluoylbenzoate; t-butylperoxy benzoate; bis (t-butylperoxy) isophthalate; t-butylperoxyallyl monocarbonate; and 3,3',4,4'-tetra (t-butylperoxycarbonyl) benzophenone. Each of these polymerization initiators may be used singularly, or two or more of them may be used in combination. Even among the above thermal radical polymerization initiators, preferred are, for example, dicumyl peroxide; t-hexyl hydroperoxide; 2,5-dimethyl-2,5-bis (t-butylperoxy) hexane; $\alpha$, $\alpha$'-bis (t-butylperoxy) diisopropyl benzene; t-butylcumyl peroxide; and di-t-butyl peroxide. It is preferred that such polymerization initiator(s) be added in an amount of 0.5 to 10 parts by mass, more preferably 0.5 to 5 parts by mass, with respect to 100 parts by mass of the liquid bismaleimide (B).

Here, the heat-curable resin composition of the present invention is normally used under illumination such as fluorescent lighting. Thus, a viscosity of this composition will increase due to a photopolymerization reaction at the point of use, if containing a photopolymerization initiator. For this reason, it is not preferred that a photopolymerization initiator be substantively contained in the heat-curable resin composition. The expression "substantively" refers to an idea that a photopolymerization initiator is contained in a minute amount at which viscosity increase cannot be confirmed i.e. it is preferred that no photopolymerization initiator be contained.

The inorganic filler is added to reduce a thermal expansion rate of and improve a moisture resistance reliability of the heat-curable resin composition. Examples of such inorganic filler include silicas such as a molten silica, a crystalline silica and cristobalite; alumina; silicon nitride; aluminum nitride; boron nitride; titanium oxide; glass fibers; and magnesium oxide. An average particle diameter and shape of these inorganic fillers may be selected in accordance with the intended use. Particularly, a spherical alumina, a spherical molten silica and glass fibers are, for example, preferred.

The inorganic filler is added in an amount of 20 to 1,500 parts by mass, more preferably 100 to 1,000 parts by mass, with respect to a total of 100 parts by mass of the components (A) and (B).

The mold release agent is added to improve a mold releasability from a mold. Any known mold release agent can be used, and examples of such mold release agent include a carnauba wax; a rice wax; a candelilla wax; polyethylene; an oxidized polyethylene; polypropylene; a montanic acid; a montan wax as an ester compound of a montanic acid and an alcohol such as a saturated alcohol, 2-(2-hydroxyethylamino) ethanol, ethylene glycol or glycerin; a stearic acid; a stearic acid ester; and a stearic acid amide.

The flame retardant is added to impart a flame retardance. There are no particular restrictions on such flame retardant, and any known flame retardant may be used. Examples of the flame retardant include a phosphazene compound, a silicone compound, a zinc molybdate-supported talc, a zinc molybdate-supported zinc oxide, an aluminum hydroxide, a magnesium hydroxide and a molybdenum oxide.

The ion trapping agent is added to trap the ion impurities contained in the liquid resin composition, and avoid a thermal degradation and a moisture absorption degradation. While there are no particular restrictions on such ion trapping agent; and any known ion trapping agent may be used, examples of such ion trapping agent include hydrotalcites, a bismuth hydroxide compound and rare-earth oxides.

Although the amount of the component (C) added varies depending on the intended use of the heat-curable resin composition, an additive(s) other than the inorganic filler are preferably in an amount of not larger than 2% by mass with respect to the whole heat-curable resin composition.

Production method of heat-curable resin composition

The heat-curable resin composition of the present invention can, for example, be produced by the following method.

For example, a mixture of the components (A) and (B) can be obtained by simultaneously or separately mixing, stirring, melting and/or dispersing the heat-curable resin (A) and the liquid bismaleimide compound (B) while performing a heating treatment if necessary. At least one kind of the inorganic filler, mold release agent, flame retardant and ion trapping agent as the other additives (C) may be added to and mixed with the mixture of the components (A) and (B). Each of the components (A) to (C) may be used singularly, or two or more of these components may be used in combination.

There are no particular restrictions on a production method of the composition and a device(s) for performing mixing, stirring and dispersion. However, specific examples of such device(s) include a kneader equipped with a stirring and heating devices, a twin-roll mill, a triple-roll mill, a ball mill, a planetary mixer and a mass-colloider. These devices can also be appropriately used in combination.

The heat-curable resin composition of the invention thus obtained is superior in fluidity, and particularly exhibits a viscosity of 1 mPa·s to 850 Pa·s when measured by an E-type viscometer at 25°C in accordance with a method described in JIS Z8803:2011. It is preferred that such viscosity be 1 to 800 Pa·s, more preferably 3 to 600 Pa·s.

[Working example]

The present invention is described in greater detail hereunder with reference to working and comparative examples. However, the invention is not limited to the following working examples.

In each of working examples 1 to 26; and comparative examples 1 to 15, the components below were combined together at composition ratios shown in Tables 1 to 3 to prepare a heat-curable resin composition. Each heat-curable resin composition was later molded at 100°C for 2 hours, and then at 150°C for another 4 hours to obtain a cured product. Here, in Tables 1 to 3, the amounts of the components (A) to (C) are expressed as parts by mass.

(A) Heat-curable resin

(A1) Heat-curable resin component (Epoxy resin and cyanate resin)

(A1-1) Bisphenol A-type epoxy resin (YD-8125 by Mitsubishi Chemical Corporation)
(A1-2) Aminophenol-type trifunctional epoxy resin (jER630 by Mitsubishi Chemical Corporation)
(A1-3) Bis-E type cyanate resin (LECy by LONZA Japan.)

(A2) Curing agent

(A2-1) Allyl phenol-type phenolic resin (MEH-8000H by MEIWA PLASTIC INDUSTRIES, LTD.)
(A2-2) Acid anhydride curing agent (RIKACID MH by New Japan Chemical Co., Ltd.)
(A2-3) 3,3'-diethyl-4,4'-diaminodiphenylmethane (KAYAHARD AA by Nippon Kayaku Co., Ltd.)

(B) Bismaleimide compound

(B1) Liquid bismaleimide compound

(B1-1) Liquid bismaleimide compound represented by the following formula (B1-1) (BMI-689 by Designer Molecules, Inc.)

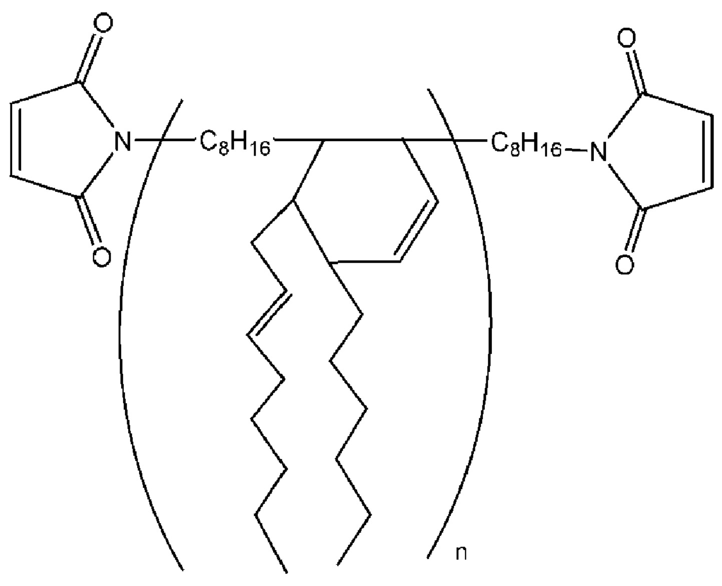

(B1-1)

(In formula (B1-1), n represents 1 to 10.)
(B1-2) Liquid bismaleimide compound represented by the following formula (B1-2) (BMI-1500 by Designer Molecules, Inc.)

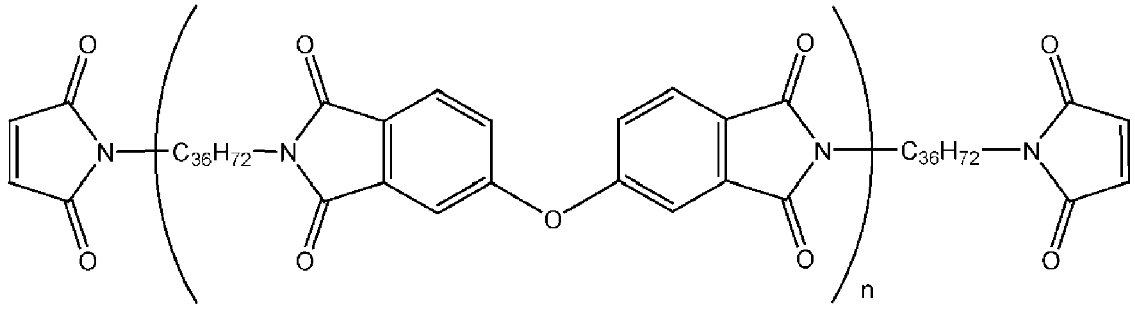

(B1-2)

(In formula (B1-2), n represents 1 to 10.)

(B1-3) Liquid bismaleimide compound represented by the following formula (B1-3) (BMI-1700 by Designer Molecules, Inc.)

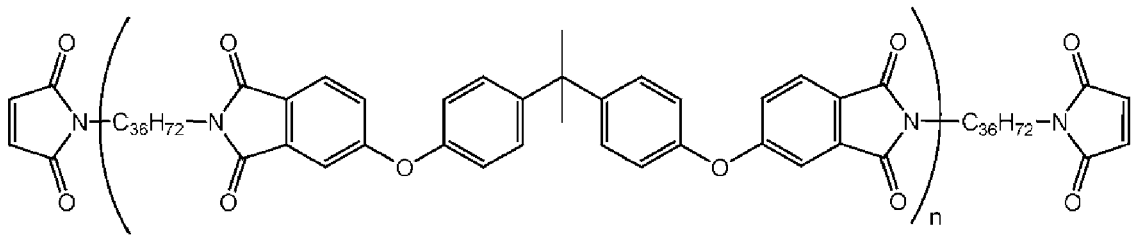

(B1-3)

(In formula (B1-3), n represents 1 to 10.)

(B2) Solid bismaleimide compound

(B2-1) 4,4'-diphenylmethane bismaleimide (BMI-1000 by Daiwakasei Industry Co., Ltd.)
(B2-2) m-phenylene bismaleimide (BMI-3000 by Daiwakasei Industry Co., Ltd.)
(B2-3) Bisphenol A diphenyl ether bismaleimide (BMI-4000 by Daiwakasei Industry Co., Ltd.)

(C) Other additives

(C1) Curing accelerator

(C1-1) 2-ethyl-4-methylimidazole (by SHIKOKU CHEMICALS CORPORATION.)
(C1-2) Triphenylphosphine (by HOKKO CHEMICAL INDUSTRY CO., LTD.)

(C2) Polymerization initiator

(C2-1) PERCUMYL D (by NOF CORPORATION)

(C3) Inorganic filler

(C3-1) Molten spherical silica with an average particle diameter of 14 $\mu$m (by TATSUMORI LTD.)

(C4) Silane coupling agent

(C4-1) $\gamma$-glycidoxypropyltrimethoxysilane (KBM-403 by Shin-Etsu Chemical Co., Ltd.)

The following properties of each composition prepared at given composition ratios were measured, and the results thereof are shown in Table 1, Table 2 (working examples) and Table 3 (comparative examples).

Evaluation items

(1) Viscosity

An E-type viscometer was used to measure a viscosity of each composition at 25°C in accordance with a method described in JIS Z8803:2011. Specifically, measured was a viscosity two minutes after the composition had been set to the viscometer.

(2) Adhesion

A specimen for an adhesion test was obtained by applying the heat-curable resin composition of the invention to a 10 × 10 mm silicon wafer, mounting a silicon chip thereon, and then curing the same under the above curing condition. A bond tester DAGE-SERIES-4000PXY (by Nordson Advanced Technology Japan K.K.) was used to measure a shear adhesion force of the specimen at room temperature (25°C). Here, an adhesion area between the frame of the specimen and the resin was 10 $mm^2$. An adhesion at a high temperature was measured in a way such that the specimen was left at a stage of 260°C for 30 sec, followed by measuring the adhesion thereof as is the case under room temperature.

A decrease rate in adhesion force to Si at a high temperature [%] was calculated using the following formula. Further, a similar evaluation was performed on a specimen employing a Cu lead frame instead of a silicon wafer, and a decrease rate in adhesion force to Cu at a high temperature [%] was also calculated in a similar manner.

[Formula 1]

$$\text{Rate of decrease in adhesion force to Si at high temperature[\%]}$$

$$= \frac{(\text{Adhesion force to Si[MPa]} - \text{Adhesion force to Si at high temperature[MPa]})}{\text{Adhesion force to Si[MPa]}} \times 100$$

(3) Water absorption rate

A 50 mm diameter × 3 mm thickness disk that had been prepared under the above curing conditions was exposed to a saturated water vapor of $2.03 \times 10^5$ Pa at 121°C in a pressure cooker for 96 hours. A rate of increase in the weight of such disk was considered as a water absorption rate.

(4) Bending elastic modulus

A bending elastic modulus of a cured product prepared under the above curing conditions was measured in accordance with JIS K6911:2006.

[Table 1]

| | | Working example 1 | Working example 2 | Working example 3 | Working example 4 | Working example 5 | Working example 6 | Working example 7 | Working example 8 | Working example 9 | Working example 10 | Working example 11 | Working example 12 | Working example 13 | Working example 14 |
|---|---|---|---|---|---|---|---|---|---|---|---|---|---|---|---|
| (A) Heat-curable resin | (A1-1) | 47 | 39 | 32 | 16 | 49 | 42 | 35 | 49 | 42 | 36 | 36 | 56 | 38 | 57 |
| | (A1-2) | | | | | | | | | | | | | | |
| | (A1-3) | | | | | | | | | | | | | | |
| | (A2-1) | 43 | 41 | 38 | 34 | 41 | 38 | 35 | 41 | 38 | 34 | | | | |
| | (A2-2) | | | | | | | | | | | 44 | | 42 | |
| | (A2-3) | | | | | | | | | | | | 24 | | 23 |
| (B) Bismaleimide compound | (B1-1) Liquid | 10 | 20 | 30 | 50 | | | | | | | 20 | 20 | | |
| | (B1-2) Liquid | | | | | 10 | 20 | 30 | | | | | | 20 | 20 |
| | (B1-3) Liquid | | | | | | | | 10 | 20 | 30 | | | | |
| | (B2-1) Solid | | | | | | | | | | | | | | |
| | (B2-2) Solid | | | | | | | | | | | | | | |
| | (B2-3) Solid | | | | | | | | | | | | | | |
| (C) Other additive | (C1-1) Curing accelerator | 1 | 1 | 1 | 1 | 1 | 1 | 1 | 1 | 1 | 1 | 1 | | 1 | |
| | (C1-2) Curing accelerator | | | | | | | | | | | | | | |
| | (C2-1) Polymerization initiator | 0.2 | 0.4 | 0.6 | 1 | 0.2 | 0.4 | 0.6 | 0.2 | 0.4 | 0.6 | 0.4 | 0.4 | 0.4 | 0.4 |
| | (C3-1) Inorganic filler | 240 | 240 | 240 | 240 | 240 | 240 | 240 | 240 | 240 | 240 | 240 | 240 | 240 | 240 |
| | (C4-1) Silane coupling agent | 1 | 1 | 1 | 1 | 1 | 1 | 1 | 1 | 1 | 1 | 1 | 1 | 1 | 1 |
| Evaluation item | Viscosity[Pa•s] | 90 | 80 | 70 | 50 | 140 | 160 | 200 | 160 | 240 | 380 | 15 | 40 | 30 | 80 |
| | Adhesion force to Si[MPa] | 26 | 28 | 28 | 28 | 28 | 29 | 29 | 28 | 29 | 29 | 27 | 29 | 29 | 29 |
| | Adhesion force to Si at high temperature[MPa] | 11.0 | 14.1 | 14.8 | 15.1 | 12.4 | 14.2 | 14.9 | 12.2 | 13.9 | 15.1 | 14.0 | 17.0 | 14.2 | 16.8 |
| | Rate of decrease in adhesion force to Si at high temperature[%] | 57.7 | 49.6 | 47.1 | 46.1 | 55.7 | 51.0 | 48.6 | 56.4 | 52.1 | 47.9 | 48.1 | 41.4 | 51.0 | 42.1 |
| | Adhesion force to Cu[MPa] | 14.0 | 14.8 | 15.0 | 14.2 | 14.2 | 14.3 | 14.8 | 14.1 | 14.5 | 14.6 | 16.1 | 15.5 | 16.7 | 16.1 |
| | Adhesion force to Cu at high temperature[MPa] | 1.8 | 2.1 | 2.6 | 3.4 | 3.1 | 3.2 | 3.2 | 3.1 | 3.5 | 3.5 | 3.8 | 3.6 | 3.8 | 3.5 |
| | Rate of decrease in adhesion force to Cu at high temperature[%] | 87.1 | 85.8 | 82.7 | 76.1 | 78.2 | 77.6 | 78.4 | 78.0 | 75.9 | 76.0 | 76.4 | 76.8 | 77.2 | 78.3 |
| | Water absorption rate[%] | 0.3 | 0.3 | 0.3 | 0.5 | 0.3 | 0.3 | 0.3 | 0.3 | 0.3 | 0.3 | 0.4 | 0.6 | 0.4 | 0.6 |
| | Bending elastic modulus[MPa] | 8500 | 7300 | 6100 | 3500 | 8000 | 6800 | 6000 | 8000 | 6800 | 6000 | 7100 | 6900 | 6800 | 6700 |

[Table 2]

| | | Working example 15 | Working example 16 | Working example 17 | Working example 18 | Working example 19 | Working example 20 | Working example 21 | Working example 22 | Working example 23 | Working example 24 | Working example 25 | Working example 26 |
|---|---|---|---|---|---|---|---|---|---|---|---|---|---|
| (A) Heat-curable resin | (A1-1) | | | | | 32 | 35 | 36 | 36 | | | | |
| | (A1-2) | 30 | 32 | 47 | 48 | | | | | 30 | | | |
| | (A1-3) | | | | | | | | | | 86 | 67 | 48 |
| | (A2-1) | 50 | 48 | | | 38 | 35 | 34 | | 50 | 4 | 3 | 2 |
| | (A2-2) | | | | | | | | 44 | | | | |
| | (A2-3) | | | 33 | 32 | | | | | | | | |
| (B) Bismaleimide compound | (B1-1) Liquid | 20 | | 20 | | 30 | | | 20 | 20 | | | |
| | (B1-2) Liquid | | 20 | | 20 | | 30 | | | | 10 | 30 | 50 |
| | (B1-3) Liquid | | | | | | | 30 | | | | | |
| | (B2-1) Solid | | | | | | | | | | | | |
| | (B2-2) Solid | | | | | | | | | | | | |
| | (B2-3) Solid | | | | | | | | | | | | |
| (C) Other additive | (C1-1) Curing accelerator | 1 | 1 | | | | | | | | | | |
| | (C1-2) Curing accelerator | | | | | 1 | 1 | 1 | 1 | 1 | 1 | 1 | 1 |
| | (C2-1) Polymerization initiator | 0.4 | 0.4 | 0.4 | 0.4 | 0.6 | 0.6 | 0.6 | 0.4 | 0.4 | 0.2 | 0.6 | 1 |
| | (C3-1) Inorganic filler | 240 | 240 | 240 | 240 | 240 | 240 | 240 | 240 | 240 | 240 | 240 | 240 |
| | (C4-1) Silane coupling agent | 1 | 1 | 1 | 1 | 1 | 1 | 1 | 1 | 1 | 1 | 1 | 1 |
| Evaluation item | Viscosity[Pa·s] | 65 | 110 | 30 | 60 | 65 | 180 | 350 | 15 | 50 | 5 | 10 | 60 |
| | Adhesion force to Si[MPa] | 29 | 29 | 30 | 30 | 27 | 30 | 30 | 28 | 28 | 30 | 30 | 30 |
| | Adhesion force to Si at high temperature[MPa] | 15.5 | 15.8 | 16.7 | 16.8 | 14.1 | 14.5 | 15.0 | 12.1 | 16.0 | 17.6 | 18.1 | 16.5 |
| | Rate of decrease in adhesion force to Si at high temperature[%] | 46.6 | 45.5 | 44.3 | 44.0 | 47.8 | 51.7 | 50.0 | 56.8 | 42.9 | 41.3 | 39.7 | 45.0 |
| | Adhesion force to Cu[MPa] | 16.8 | 16.3 | 17.3 | 17.1 | 15.1 | 15.1 | 15.0 | 14.1 | 16.8 | 17.1 | 17.1 | 17.1 |
| | Adhesion force to Cu at high temperature[MPa] | 3.1 | 3.4 | 3.7 | 3.7 | 2.5 | 3.0 | 3.1 | 3.3 | 3.2 | 5.4 | 5.6 | 4.8 |
| | Rate of decrease in adhesion force to Cu at high temperature[%] | 81.5 | 79.1 | 78.6 | 78.4 | 83.4 | 80.1 | 79.3 | 76.6 | 81.0 | 68.4 | 67.3 | 71.9 |
| | Water absorption rate[%] | 0.6 | 0.6 | 0.6 | 0.6 | 0.2 | 0.2 | 0.3 | 0.4 | 0.5 | 1.1 | 0.9 | 0.8 |
| | Bending elastic modulus[MPa] | 6700 | 6700 | 6700 | 6700 | 6300 | 6100 | 6000 | 6700 | 6800 | 6100 | 6700 | 6700 |

[Table 3]

| | | Comparative example 1 | Comparative example 2 | Comparative example 3 | Comparative example 4 | Comparative example 5 | Comparative example 6 | Comparative example 7 | Comparative example 8 | Comparative example 9 | Comparative example 10 | Comparative example 11 | Comparative example 12 | Comparative example 13 | Comparative example 14 | Comparative example 15 |
|---|---|---|---|---|---|---|---|---|---|---|---|---|---|---|---|---|
| (A) Heat-curable resin | (A1-1) | 55 | 51 | 73 | 44 | 40 | 58 | 44 | 44 | 55 | 51 | | | | | |
| | (A1-2) | | | | | | | | | | | | | | | |
| | (A1-3) | | | | | | | | | | | 96 | 77 | | | |
| | (A2-1) | 45 | | | 36 | | | 36 | 36 | 45 | | 4 | 3 | | | |
| | (A2-2) | | 49 | | | 40 | | | | | 49 | | | | | |
| | (A2-3) | | | 27 | | | 22 | | | | | | | | | |
| (B) Bismaleimide compound | (B1-1) Liquid | | | | | | | | | | | | | 100 | | |
| | (B1-2) Liquid | | | | | | | | | | | | | | 100 | |
| | (B1-3) Liquid | | | | | | | | | | | | | | | 100 |
| | (B2-1) Solid | | | | 20 | 20 | 20 | | | | | | 20 | | | |
| | (B2-2) Solid | | | | | | | 20 | | | | | | | | |
| | (B2-3) Solid | | | | | | | | 20 | | | | | | | |
| (C) Other additive | (C1-1) Curing accelerator | 1 | 1 | | 1 | 1 | 1 | 1 | 1 | | | | | 1 | 1 | 1 |
| | (C1-2) Curing accelerator | | | | | | | | | 1 | 1 | 1 | 1 | | | |
| | (C2-1) Polymerization initiator | | | | 0.4 | 0.4 | 0.4 | 0.4 | 0.4 | | | | 0.4 | | | |
| | (C3-1) Inorganic filler | 240 | 240 | 240 | 240 | 240 | 240 | 240 | 240 | 240 | 240 | 240 | 240 | 240 | 240 | 240 |
| | (C4-1) Silane coupling agent | 1 | 1 | 1 | 1 | 1 | 1 | 1 | 1 | 1 | 1 | 1 | 1 | 1 | 1 | 1 |
| Evaluation item | Viscosity[Pa·s] | 140 | 20 | 60 | 400 | 220 | 320 | 410 | 400 | 130 | 20 | 5 | 200 | 40 | 160 | 250 |
| | Adhesion force to Si[MPa] | 30 | 30 | 30 | 28 | 27 | 28 | 29 | 29 | 25 | 26 | 30 | 25 | 3.4 | 2.1 | 2.8 |
| | Adhesion force to Si at high temperature[MPa] | 9.8 | 9.1 | 11.1 | 10.2 | 10.1 | 9.8 | 10.7 | 10.8 | 7.8 | 8.4 | 16.8 | 10.1 | 1.5 | 1.3 | 1.2 |
| | Rate of decrease in adhesion force to Si at high temperature[%] | 67.3 | 69.7 | 63.0 | 63.6 | 62.6 | 65.0 | 63.1 | 62.8 | 68.8 | 67.7 | 44.0 | 59.6 | 55.9 | 38.1 | 57.1 |
| | Adhesion force to Cu[MPa] | 8.7 | 11.1 | 9.1 | 8.9 | 11.0 | 9.8 | 8.8 | 8.8 | 8.8 | 10.2 | 15.1 | 11.2 | 1.1 | 1.2 | 1.1 |
| | Adhesion force to Cu at high temperature[MPa] | 0.6 | 1.4 | 1.3 | 1.1 | 1.3 | 1.7 | 1.2 | 1.1 | 0.6 | 1.5 | 4.1 | 2.1 | 0.3 | 0.4 | 0.4 |
| | Rate of decrease in adhesion force to Cu at high temperature[%] | 93.1 | 87.4 | 85.7 | 87.6 | 88.2 | 82.7 | 86.4 | 87.5 | 93.2 | 85.3 | 72.8 | 81.3 | 72.7 | 66.7 | 63.6 |
| | Water absorption rate[%] | 0.3 | 0.3 | 0.6 | 0.5 | 0.6 | 1.1 | 0.6 | 0.5 | 0.2 | 0.2 | 1.3 | 2 | 0.4 | 0.3 | 0.4 |
| | Bending elastic modulus[MPa] | 11000 | 11500 | 10900 | 12600 | 12800 | 12000 | 12500 | 12200 | 11000 | 11400 | 11400 | 6100 | 1200 | 1500 | 1400 |

The heat-curable resin composition of the present invention does not employ a solvent. Since the composition of the invention uses the component (B) in liquid form at 25°C, the composition has a superior workability due to its low viscosity, exhibits a low elasticity, and will not have a resin reliability thereof impaired even under a high-humidity/temperature condition and a high-temperature condition.

## Claims

1. A heat-curable resin composition comprising:

   (A) a heat-curable resin; and
   (B) a bismaleimide compound in liquid form at 25°C, wherein

   said heat-curable resin composition exhibits a viscosity of 1 mPa·s to 850 Pa·s when measured at 25°C in accordance with a method described in JIS Z8803:2011.

2. The heat-curable resin composition according to claim 1, wherein said heat-curable resin (A) comprises a heat-curable resin component (A1) and a curing agent (A2).

3. The heat-curable resin composition according to claim 2, wherein said heat-curable resin component (A1) is at least one selected from an epoxy resin, a phenolic resin, an unsaturated imide resin, a cyanate resin, an isocyanate resin, a benzoxazine resin, an oxetane resin, an amino resin, an unsaturated polyester resin, an allyl resin, a dicyclopentadiene resin, a silicone resin, a triazine resin and a melamine resin.

4. The heat-curable resin composition according to claim 3, wherein said heat-curable resin component (A1) is an epoxy resin or a cyanate resin, and said curing agent (A2) is a curing agent for either an epoxy resin or a cyanate resin.

5. The heat-curable resin composition according to any one of claims 1 to 4, wherein said bismaleimide compound (B) in liquid form at 25°C is a compound represented by the following formula (1):

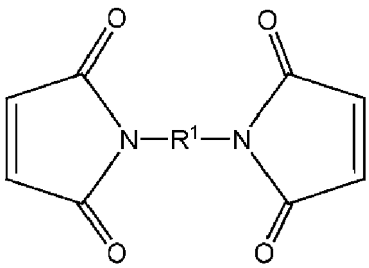

(1)

   wherein $R^1$ represents at least one kind of divalent organic group selected from the group consisting of a linear or branched alkylene group having 1 to 40 carbon atoms; a divalent cyclic hydrocarbon group that has 3 to 20 carbon atoms and may also have a hetero atom(s); -O-; -NH-; -S- ; and $-SO_2-$.

6. The heat-curable resin composition according to claim 5, wherein said bismaleimide compound represented by the formula (1) is at least one kind of bismaleimide compound selected from the group consisting of bismaleimide compounds represented by the following formulae (1-1), (1-2) and (1-3):

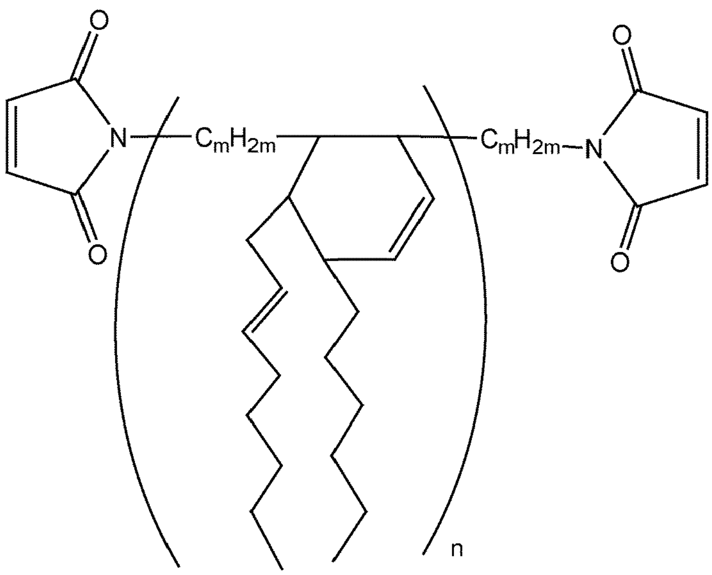

(1-1)

wherein n represents 1 to 10, and m represents 8 to 40

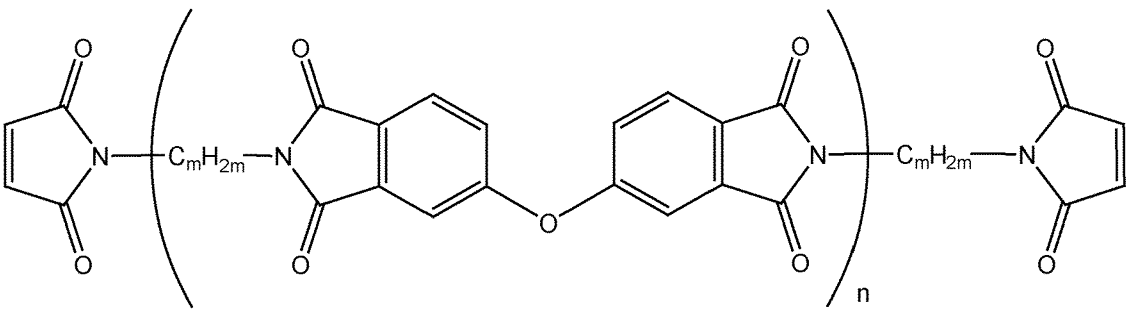

(1-2)

wherein n represents 1 to 10, and m represents 8 to 40

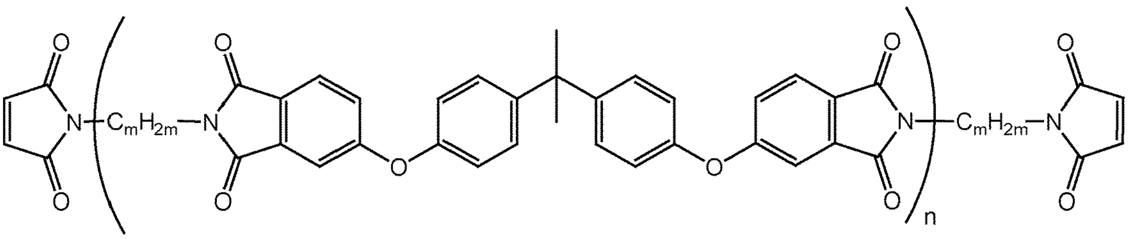

(1-3)

wherein n represents 1 to 10, and m represents 8 to 40.

Europäisches Patentamt
European Patent Office
Office européen des brevets

# EUROPEAN SEARCH REPORT

Application Number
EP 16 18 5322

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE WPI<br>Week 201470<br>Thomson Scientific, London, GB;<br>AN 2014-S13416<br>XP002765195,<br>-& JP 2014 194013 A (KYOCERA CHEM CORP)<br>9 October 2014 (2014-10-09)<br>* abstract *<br>* paragraphs [0001], [0065], [0066] *<br>* example 3; table 1 *<br>----- | 1-6 | INV.<br>C08K5/3415<br>C08G73/12<br>C08L79/08<br>C08L79/04<br>C08L63/00 |
| X<br><br>A | EP 1 736 520 A1 (SUMITOMO BAKELITE CO [JP]) 27 December 2006 (2006-12-27)<br>* paragraphs [0036] - [0038], [0132] *<br>* example Comp. Ex. A3; Ex. C6; tables 1, 3 *<br>----- | 1-5<br><br>6 | |
| X | CN 104 629 341 A (ZHONGSHAN ELITE MATERIAL CO LTD) 20 May 2015 (2015-05-20)<br>* examples E9-E11 *<br>----- | 1-6 | |
| X<br><br><br>A | WO 98/10920 A1 (QUANTUM MATERIALS INC [US]; HUSSON FRANK D JR [US]; NEFF BENJAMIN [US]) 19 March 1998 (1998-03-19)<br>* page 1, lines 1-5 *<br>* page 6, lines 25-32 *<br>* examples *<br>----- | 1-5<br><br><br>6 | TECHNICAL FIELDS SEARCHED (IPC)<br>C08L<br>C08K<br>C08G |
| X | DATABASE WPI<br>Week 201406<br>Thomson Scientific, London, GB;<br>AN 2014-A68820<br>XP002765196,<br>-& JP 2014 001289 A (NIPPON STEEL CHEM CO LTD) 9 January 2014 (2014-01-09)<br>* abstract *<br>* paragraphs [0065] - [0066] *<br>* example 3; table 1 *<br>----- | 1-3,5,6 | |

The present search report has been drawn up for all claims

4

| Place of search | Date of completion of the search | Examiner |
|---|---|---|
| Munich | 14 December 2016 | Behm, Sonja |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 16 18 5322

This annex lists the patent family members relating to the patent documents cited in the above-mentioned European search report.
The members are as contained in the European Patent Office EDP file on
The European Patent Office is in no way liable for these particulars which are merely given for the purpose of information.

14-12-2016

| Patent document cited in search report | Publication date | Patent family member(s) | Publication date |
|---|---|---|---|
| JP 2014194013 A | 09-10-2014 | NONE | |
| EP 1736520 A1 | 27-12-2006 | CN 1930263 A | 14-03-2007 |
| | | CN 101724354 A | 09-06-2010 |
| | | CN 102585760 A | 18-07-2012 |
| | | CN 102604591 A | 25-07-2012 |
| | | CN 102604592 A | 25-07-2012 |
| | | CN 102618213 A | 01-08-2012 |
| | | EP 1736520 A1 | 27-12-2006 |
| | | EP 2647686 A2 | 09-10-2013 |
| | | JP 4967655 B2 | 04-07-2012 |
| | | KR 20070005661 A | 10-01-2007 |
| | | MY 151958 A | 31-07-2014 |
| | | SG 151269 A1 | 30-04-2009 |
| | | TW I359835 B | 11-03-2012 |
| | | US 2007213467 A1 | 13-09-2007 |
| | | US 2012068106 A1 | 22-03-2012 |
| | | US 2013109798 A1 | 02-05-2013 |
| | | WO 2005090510 A1 | 29-09-2005 |
| CN 104629341 A | 20-05-2015 | CN 104629341 A | 20-05-2015 |
| | | TW 201518403 A | 16-05-2015 |
| WO 9810920 A1 | 19-03-1998 | AU 4074597 A | 02-04-1998 |
| | | EP 0925175 A1 | 30-06-1999 |
| | | JP 4033909 B2 | 16-01-2008 |
| | | JP 2001501230 A | 30-01-2001 |
| | | US 5789757 A | 04-08-1998 |
| | | US 6187886 B1 | 13-02-2001 |
| | | WO 9810920 A1 | 19-03-1998 |
| JP 2014001289 A | 09-01-2014 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H11124433 A
- JP 2004168894 A
- JP 2014521754 PCT